# DEMANDE DE BREVET EUROPEEN

(11) **EP 0 933 867 A1**
(43) Date de publication de la demande: **04.08.1999**
(21) Numéro de dépôt: 98870015.9
(22) Date de dépôt: 28.01.1998
(51) Int. Cl.: H02M 7/00

(54) **Module de convertisseur de puissance**

(71) Demandeur: GEC ALSTHOM ACEC TRANSPORT S.A., 6001 Charleroi (BE)
(72) Inventeur: Masselus, Jean-Emmanuel, 6032 Mont-Sur-Marchienne (BE); Colasse, Alexis, 5100 Jambes (BE); Bodson, Jean-Marie, 1300 Wavre (BE)
(74) Mandataire: Van Malderen, Joelle

(57) **Abrégé**

La présente invention concerne un module de convertisseur de puissance alimenté par une tension d'alimentation continue (Ucat) composé d'interrupteurs statiques du type IGBT, se présentant sous la forme d'au moins un module IGBT (10) directement fixé sur un bloc refroidisseur (14) lui-même relié à des ailettes (0) ou similaires, caractérisé en ce qu'une isolation (13) entre le bloc refroidisseur (14) et les ailettes (0) est prévue et en ce que le bloc refroidisseur (14) sur lequel sont fixés le ou les modules IGBT (10) est relié à un potentiel intermédiaire entre le potentiel des ailettes (0) et le point haut de la tension d'alimentation (+Ucat) du convertisseur de puissance.

## Description

### Objet de l'invention

La présente invention se rapporte à un dispositif tel qu'un convertisseur de puissance ou un module de convertisseur formé par des interrupteurs statiques comprenant eux-mêmes un ensemble de semiconducteurs. Des exemples de convertisseurs de puissance sont les hacheurs et les onduleurs.

### Arrière-plan technologique à la base de l'invention

Les onduleurs, et plus particulièrement les onduleurs de tension, sont destinés à fournir une tension alternative à partir d'une tension continue.

Un domaine d'application particulièrement important est la commande en vitesse variable de machines synchrones ou asynchrones.

Dans ce cas, il est nécessaire de fournir à la charge, qui peut être représentée par chaque phase d'un moteur synchrone ou asynchrone, un système triphasé en tension le plus proche possible d'un système triphasé sinusoïdal équilibré variable en fréquence et en amplitude. L'onduleur de tension est un dispositif qui permet d'atteindre ce but, et qui utilise en général des montages de composants de puissance tels que des thyristors, des GTO, etc.

Depuis quelque temps sont apparus de nouveaux types d'interrupteurs statiques qui peuvent être définis sous le vocable "IGBT" (Insulated Gate Bipolar Transistor). Ces dispositifs sont des composants contrôlables, en ce sens que l'on peut à tout moment imposer le courant que l'on veut dans l'interrupteur en ajustant la tension sur sa grille de commande, tandis que pour les commutateurs de l'ancienne génération représentés par exemple par des GTO ou similaires, il est uniquement possible de décider du moment de leur allumage et du moment de leur extinction.

Ceci signifie que selon l'état de la technique, c'est-à-dire dans le cas où l'on utilise uniquement des semi-conducteurs de type GTO pour réaliser les onduleurs, ceux-ci ne peuvent être utilisés sans un circuit de protection annexe (circuit snubber) qui permet de contrôler les surtensions à leurs bornes. En effet, si tel n'était pas le cas, ils seraient détruits à la première commutation du fait des surtensions induites par les inductances parasites du câblage.

Par contre, dans le cas de commutateurs réalisés à partir de semi-conducteurs IGBT, on pourra se passer d'un circuit de protection. En effet, en réalisant la commutation du courant le plus rapidement possible de manière à réduire les pertes et en évitant de créer des surtensions prohibitives, il ne sera pas nécessaire d'adjoindre ce circuit de protection.

Néanmoins, pour pouvoir atteindre ces limites et exploiter le composant IGBT au maximum, il est nécessaire que les inductances du câblage soient réduites à des valeurs très faibles, ce qui est encore difficilement réalisable avec des boîtiers classiques tels que ceux utilisés pour les semi-conducteurs de type GTO.

Les semi-conducteurs IGBT sont habituellement disposés sous forme de modules. En pratique, on place dans un même boîtier les semi-conducteurs IGBT et leur diode antiparallèle. La construction du boîtier doit être telle qu'elle minimise en outre les inductances parasites internes au boîtier et permet une connexion interne par bus bar, ce qui va minimiser l'inductance parasite du câblage.

Selon l'état de la technique, ces modules possèdent une semelle qui sert au montage mécanique sur le refroidisseur. La semelle est isolée électriquement des semi-conducteurs, et donc également des bornes de raccordement de puissance et de commande. Ainsi, le module peut être fixé sur un refroidisseur lui-même relié à la masse.

L'isolation des modules doit être prévue pour correspondre à la tension du réseau d'alimentation pour laquelle elle a été prévue. Dans un exemple particulier, les modules IGBT et diodes à 3300 V possèdent actuellement une isolation adaptée aux réseaux de 1500 VDC.

Néanmoins, dans le cas d'une utilisation d'une tension d'alimentation nominale de 3000 VDC, on observe que cette isolation ainsi que la tenue en tension sont insuffisantes. Pour ce qui concerne plus particulièrement la tenue en tension, on a déjà envisagé de proposer une mise en série des semi-conducteurs pour résoudre ce problème.

La mise en série des semi-conducteurs ne résout cependant que le problème de tenue en tension et pas le problème d'isolation des modules IGBT. Pour pouvoir être utilisés sans précaution particulière sur un réseau 3000 VDC, il faudrait utiliser des modules IGBT avec un isolement prévu à cet effet.

### Buts de l'invention

Un premier but de la présente invention vise à résoudre ce problème d'isolation insuffisante dans le cas d'une utilisation de modules IGBT isolés pour une tension d'alimentation nettement inférieure à la tension d'alimentation réelle à laquelle le convertisseur fonctionne. Plus particulièrement, la présente invention vise à proposer un convertisseur qui permet l'utilisation d'IGBT isolés pour une tension de 1500 VDC dans le cas d'une tension d'alimentation nominale de 3000 VDC.

Un second but de la présente invention vise à proposer un dispositif qui permet de limiter la détérioration du convertisseur en cas de défaut d'isolement soit du module IGBT, soit du bloc refroidisseur isolé du convertisseur de puissance.

Un troisième but de la présente invention vise à proposer un procédé de détection d'un défaut d'isolement soit du module IGBT, soit du bloc refroidisseur isolé du convertisseur de puissance.

D'autres buts et avantages apparaîtront dans la description qui suit.

### Principaux éléments caractéristiques de l'invention

La présente invention se rapporte à un module de convertisseur de puissance alimenté par une tension d'alimentation continue (Ucat) composé d'interrupteurs statiques du type IGBT se présentant sous la forme d'au moins un module IGBT qui est directement fixé sur un bloc refroidisseur, lui-même relié à des ailettes ou similaires, caractérisé en ce qu'une isolation entre le bloc refroidisseur et les ailettes est prévue et en ce que ce bloc refroidisseur sur lequel sont fixés le ou les module(s) IGBT est relié à un potentiel intermédiaire entre le potentiel des ailettes et le point haut de la tension d'alimentation (Ucat) du convertisseur de puissance.

De manière particulièrement simple, on peut envisager de disposer plusieurs modules IGBT sur un même bloc refroidisseur isolé des ailettes.

Selon une forme d'exécution préférée, la mise au potentiel intermédiaire est effectuée à l'aide d'un diviseur résistif.

La présente invention concerne également un procédé de détection d'un défaut de l'isolation soit du module IGBT, soit du bloc refroidisseur, caractérisé en ce que le potentiel intermédiaire est obtenu par une source de tension en série avec une impédance et est mesuré et comparé à sa valeur théorique.

### Description des figures

- La figure 1: représente une vue en perspective d'un exemple de module d'un convertisseur de puissance tel qu'utilisé dans l'état de la technique.
- Les figures 2a et 2b: représentent une vue schématique en coupe d'un module IGBT ainsi que d'un module d'un convertisseur de puissance selon la présente invention.
- La figure 3: représente une vue en perspective d'un exemple d'exécution d'un module convertisseur de puissance selon la présente invention.
- La figure 4: représente le principe de fonctionnement et l'application à des modules à caloducs isolés.
- La figure 5: représente un dispositif destiné à la détection d'une rupture d'isolation.

### Description de plusieurs formes d'exécution préférées de l'invention

Ainsi que déjà mentionné, les convertisseurs de puissance constitués habituellement de hacheurs et d'onduleurs sont des dispositifs utilisant des interrupteurs statiques. Ces interrupteurs sont eux-mêmes formés par un ensemble de semi-conducteurs tels que thyristors, GTO, IGBT, etc.

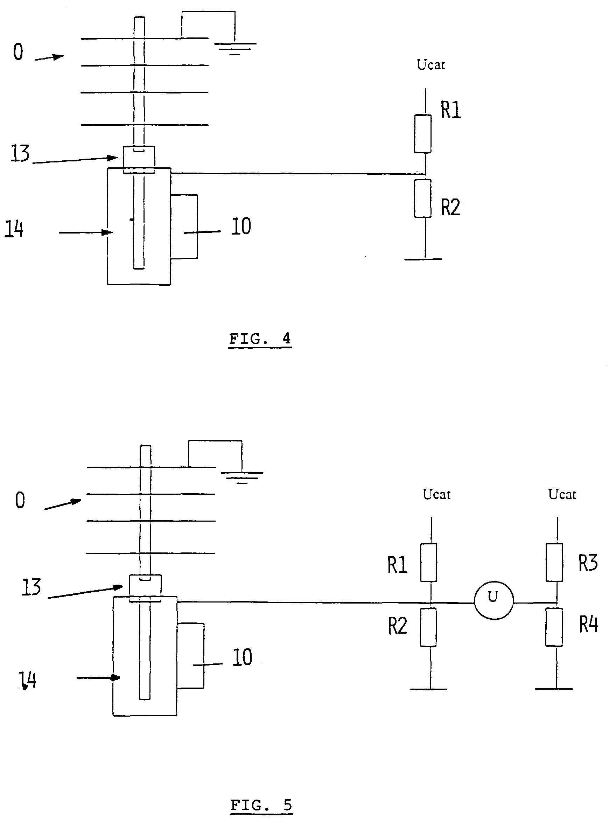

De manière classique, ces convertisseurs de puissance nécessitent l'utilisation d'un bloc refroidisseur afin d'évacuer les calories générées par le convertisseur en fonctionnement. Ce bloc refroidisseur est lui-même relié de manière classique, éventuellement par des tubes isolés, à des ailettes ou à tout autre système ayant la même fonction. Des exemples de tels refroidisseurs sont décrits aux figures 4 et 5.

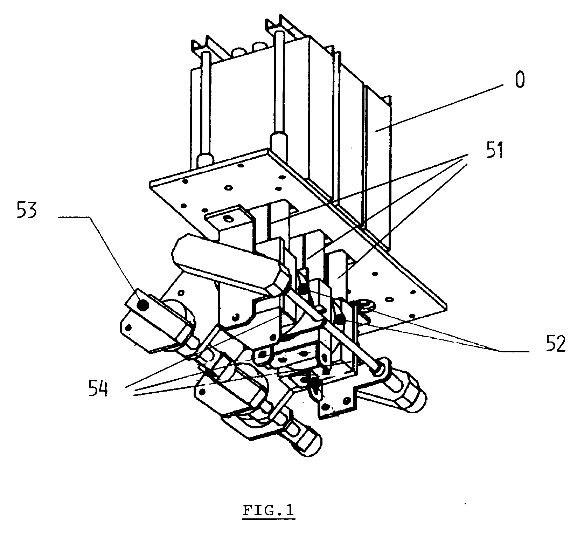

Selon l'état de la technique et ainsi que représenté à la figure 1, un convertisseur est réalisé à l'aide de plusieurs interrupteurs classiques 52, de préférence de type GTO, refroidis par des caloducs isolés. Les caloducs isolés sont constitués d'un bloc évaporateur 54 faisant office de bloc refroidisseur, chacun relié par un tube 51 à un bloc d'ailettes 0.

On observe un empilement des différents interrupteurs 52 et des blocs évaporateurs 54 des caloducs successifs. Cet empilement est maintenu sous pression à l'aide d'un dispositif adéquat 53 (clamp).

L'autre extrémité des caloducs isolés 51 est reliée à un bloc d'ailettes représenté de manière schématique par le repère 0.

La présente invention vise à proposer un dispositif qui utilise des modules IGBT tout en permettant de résoudre le problème de tenue de l'isolation pour une tension d'alimentation nettement supérieure à la tension pour laquelle l'isolation du module IGBT est prévue. Pour l'instant, les composants IGBT possèdent une isolation adaptée au réseau de 1500 VDC alors que dans certaines des applications, on utilise une tension du réseau d'alimentation (Ucat) de 3000 VDC.

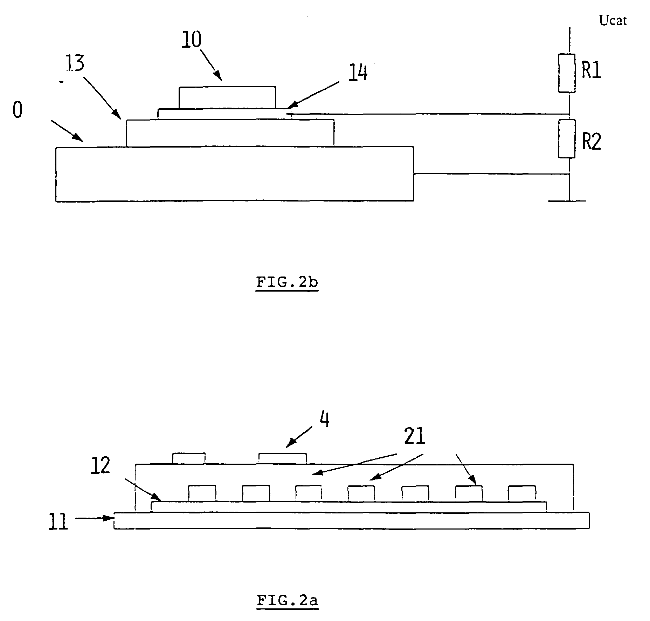

La figure 2a représente un schéma de principe d'un module IGBT. Un module IGBT comprend de manière classique plusieurs semi-conducteurs 21 disposés sur une semelle 11. Habituellement, une isolation 12 est prévue afin d'isoler les différents semi-conducteurs 21 et les bornes 4 de commande et de raccordement de la semelle 11.

La figure 2b représente sous forme d'une coupe schématique un module de convertisseur selon la présente invention comprenant un ou plusieurs modules ou boîtiers IGBT 10 fixés sur le bloc refroidisseur 14, lui-même relié aux ailettes 0 afin d'évacuer les calories générées par les boîtiers IGBT en fonctionnement.

Selon une première caractéristique importante de la présente invention, une isolation 13 supplémentaire et externe au module IGBT 10 est prévue entre les ailettes 0 et le bloc refroidisseur 14.

Selon une autre caractéristique importante de la présente invention, le bloc refroidisseur 14 sur lequel sont fixés le ou les modules IGBT 10 est relié à un potentiel intermédiaire entre le potentiel des ailettes 0, généralement la masse (0 V), et le potentiel haut de l'alimentation du convertisseur de puissance (+Ucat).

Ceci permet avantageusement de garantir une isolation des modules IGBT sans que leur propre isolation ne soit exagérément sollicitée.

En outre, cette isolation supplémentaire ne doit pas être dimensionnée pour supporter toute la tension du réseau d'alimentation, mais seulement pour supporter la différence de potentiel entre le potentiel intermédiaire et la masse (0 V).

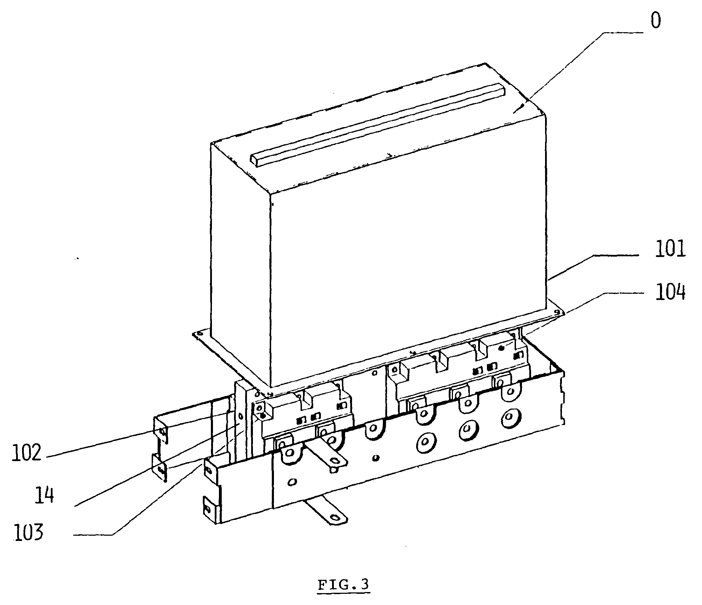

La figure 3 représente une vue en perspective d'une branche d'un onduleur à trois niveaux comprenant deux fois deux modules IGBT.

Selon cette forme d'exécution, on observe que les deux paires de modules IGBT 101, 102 d'une part et 103, 104 d'autre part, se font face et sont fixés sur le même bloc évaporateur 14 d'un caloduc qui est lui-même isolé de l'ensemble des ailettes 0. Cette disposition permet un montage aisé, simple et qui limite autant que possible l'espace utilise.

La figure 4 décrit le principe de fonctionnement du dispositif selon la présente invention dans un cas particulier d'une application pour module convertisseur à caloducs isolés tel que représenté à la figure 3.

Le refroidisseur est du type caloduc, son condenseur, représenté par une série d'ailettes 0, est mis au potentiel de la masse tandis que les modules IGBT sont fixés sur le bloc évaporateur 14. Selon la présente invention, une isolation 13 entre le condenseur 0 et l'évaporateur 14 est prévue. Le bloc évaporateur 14 sera porté à une tension qui est la moitié de la tension d'entrée du convertisseur à l'aide d'un diviseur résistif.

La tension de sortie du convertisseur varie en fonction de l'état des interrupteurs statiques qui le constituent, et est comprise entre 0, qui est le potentiel bas du convertisseur, et U caténaire, qui est la tension d'alimentation du convertisseur. De même, la tension des bornes des semi-conducteurs est également comprise entre la tension d'alimentation du convertisseur Ucat et 0. Par contre, la tension appliquée sur l'isolation 13 des modules IGBT sera comprise entre [-Ucat/2] et [+Ucat/2], et en valeur absolue, sera comprise entre 0 et Ucat/2.

La figure 5 permet de visualiser comment la détection d'une rupture d'isolation pourra être effectuée. En cas de rupture d'isolation d'un module IGBT ou même d'un caloduc, le potentiel de l'évaporateur du caloduc ne va plus être fixé uniquement par le diviseur résistif (R1, R2). Il sera a priori différent du potentiel obtenu par le diviseur résistif avant la rupture d'isolation. Il suffit pour cela de mesurer la valeur du potentiel de l'évaporateur et de la comparer à sa valeur théorique, qui sera obtenue par exemple par un diviseur résistif (R3, R4) de même caractéristiques mais non relié à l'évaporateur du caloduc, comme représenté en détail à la figure 4. Ceci permettra de détecter aisément le défaut d'isolation.

## Revendications

1. Module de convertisseur de puissance alimenté par une tension d'alimentation continue (Ucat) composé d'interrupteurs statiques du type IGBT, se présentant sous la forme d'au moins un module IGBT (10) directement fixé sur un bloc refroidisseur (14) lui-même relié à des ailettes (0) ou similaires, caractérisé en ce qu'une isolation (13) entre le bloc refroidisseur (14) et les ailettes (0) est prévue et en ce que le bloc refroidisseur (14) sur lequel sont fixés le ou les modules IGBT (10) est relié à un potentiel intermédiaire entre le potentiel des ailettes (0) et le point haut de la tension d'alimentation (+Ucat) du convertisseur de puissance.

2. Module de convertisseur de puissance selon la revendication 1, caractérisé en ce que la mise au potentiel intermédiaire du bloc refroidisseur (14) est effectuée à la moyenne des potentiels des ailettes (0) et du point haut de la tension d'alimentation du convertisseur de puissance (+Ucat).

3. Module de convertisseur de puissance selon la revendication 1 ou 2, caractérisé en ce que les ailettes (0) sont mises à la masse.

4. Module de convertisseur de puissance selon l'une quelconque des revendications précédentes, caractérisé en ce que la mise au potentiel intermédiaire du bloc refroidisseur (14) est réalisée à l'aide d'un diviseur résistif (R1, R2).

5. Module de convertisseur de puissance selon l'une quelconque des revendications précédentes, caractérisé en ce que plusieurs modules IGBT (10) constituant les interrupteurs statiques du convertisseur sont disposés sur un même bloc refroidisseur (14).

6. Module de convertisseur de puissance selon la revendication 5, caractérisé en ce que l'on a disposé sur le même bloc refroidisseur (14) deux paires de modules IGBT (101, 102 et 103, 104) se faisant face deux à deux, le bloc refroidisseur (14) étant un bloc évaporateur de caloduc.

7. Procédé de détection d'un défaut de l'isolation d'un module de convertisseur de puissance selon l'une quelconque des revendications précédentes, caractérisé en ce que le potentiel intermédiaire obtenu de préférence par un diviseur résistif (R1, R2) est mesuré et comparé à sa valeur théorique obtenue de préférence par un autre résistif (R3, R4).
